(19) Europäisches Patentamt
European Patent Office
Office européen des brevets

(11) Veröffentlichungsnummer: **0 442 079 A1**

(12) **EUROPÄISCHE PATENTANMELDUNG**

(21) Anmeldenummer: **90123952.5**

(51) Int. Cl.⁵: **B01D 53/00**, B01D 53/34

(22) Anmeldetag: **20.12.90**

(30) Priorität: **15.02.90 DE 4004645**

(43) Veröffentlichungstag der Anmeldung:
**21.08.91 Patentblatt 91/34**

(84) Benannte Vertragsstaaten:
**AT BE CH DE DK ES FR GB GR IT LI LU NL SE**

(71) Anmelder: **ARASIN GMBH**
**Weseler Strasse 100**
**W-4223 Voerde/Niederrhein(DE)**

(72) Erfinder: **Körner, Bernhard, Dipl.-Chem.**
**Boystrasse 70**
**W-4390 Gladbeck(DE)**

(74) Vertreter: **Seiler, Siegfried**
**c/o DEUTSCHE SOLVAY-WERKE GmbH**
**Langhansstrasse 6 Postfach 11 02 70**
**W-5650 Solingen 11(DE)**

(54) **Nichtschäumendes oder schwachschäumendes Mittel zum Reinigen von Gasen oder Abgasen, sowie Verfahren zur Reinigung von Abgasen.**

(57) Die vorliegende Erfindung betrifft ein nichtschäumendes oder schwachschäumendes Mittel zum Reinigen von Gasen oder Abgasen unter Abtrennung von unerwünschten chemischen Bestandteilen, wobei das mindestens zweiphasige Mittel 0,1 bis 10 Gew.-% mindestens eines fettsäurefreien, nichtbakteriziden Tensides, 1 bis 25 Gew.-% mindestens einer nichtbakteriziden ölartigen physikalisch wasserunlöslichen oder wasserschwerlöslichen Flüssigkeit (gemessen bei Wassertemperatur), 0,001 bis 5 Gew.-% aerobe und/oder anaerobe Bakterien oder eines aeroben und/oder anaeroben Bakterienstammes (berechnet als Trockenmasse an Bakterien), mehr als 50 Gew.-% Wasser sowie 0 bis 10 Gew.-% mindestens eines Entschäumungsmittels, Verarbeitungshilfs- und/oder Zusatzmittels enthält oder daraus besteht. Das Mittel wird innerhalb eines bestimmten Verfahrens unter Verwendung einer bestimmten Mindestberieselungsdichte eingesetzt.

EP 0 442 079 A1

# NICHTSCHÄUMENDES ODER SCHWACHSCHÄUMENDES MITTEL ZUM REINIGEN VON GASEN ODER ABGASEN, SOWIE VERFAHREN ZUR REINIGUNG VON ABGASEN

Die vorliegende Erfindung betrifft ein nichtschäumendes oder schwachschäumendes Mittel zum Reinigen von Gasen oder Abgasen unter Abtrennung von unerwünschten chemischen Bestandteilen, vorzugsweise von organisch-chemischen Bestandteilen (ausgenommen Abluft aus Lackspritzkabinen), wobei das Mittel mindestens zweiphasig ist und bestimmte Gewichtsmengen mindestens eines fettsäurefreien, nichtbakteriziden Tensides, mindestens einer nichtbakteriziden ölartigen physikalisch wasserunlöslichen oder wasserschwerlöslichen Flüssigkeit, aerober und/oder anaerober Bakterien oder eines aeroben und/oder anaeroben Bakterienstammes, mehr als 50 Gew.-% Wasser sowie gegebenenfalls ein Entschäumungsmittels, Verarbeitungshilfs- und/oder Zusatzmittels enthält oder daraus besteht.

Es sind bereits Verfahren zur Reinigung von Gasen bekannt, bei denen die unerwünschten chemischen Bestandteile aus dem Gas oder Abgas abgetrennt und in einen Behälter, in dem aerobe oder anaerobe Bakterien angeordnet sind, geleitet werden, wo sie mittels Bakterien abgebaut werden. Die Aufnahme dieser unerwünschten Verunreinigungen mittels Wasser, beispielsweise in Waschtürmen, ist jedoch häufig unzureichend. Andere Absorptionsmedien stören oder erschweren das Verfahren. Weiterhin ist die Verfügbarkeit oder Verteilung des Schadstoffes für die Bakterien in der wäßrigen Phase häufig unzureichend, so daß sich geringere Wirkungsgrade ergeben.

Es wird daher auch ein anderes Verfahren in der Praxis verwendet, bei dem unter Benutzung eines Tensides ein Schaum gebildet und das zu reinigende Gas durch den querschnittsabdeckenden Schaum geleitet wird. Die Abtrennung der unerwünschten Bestandteile erfolgt dann auf physikalischem Wege, z.B. mittels Adsorptionsmitteln, durch Erhitzen der Schaumflüssigkeit und dgl. in einem getrennten Behälter (vgl. DE-PS 18 07 327). Eine Kombination des Schaumverfahrens mit Bakterien stößt insofern auf Schwierigkeiten, als die auftretenden Scherkräfte die Biomasse beeinträchtigen oder schädigen und/oder eine Austragung bzw. Trennung der Biomasse aus dem Absorptionsmedium im Wäscher und/oder im nachfolgenden aeroben Reaktor erfolgt.

Ziel und Aufgabe der vorliegenden Erfindung war es, ein Mittel und ein Verfahren zu finden, bei dem mit einem hohen Wirkungsgrad die Verunreinigungen aus dem Gas entfernt und auf biologischem Wege möglichst unschädlich für die Umwelt gemacht werden können. Das Mittel und das Verfahren sollten sowohl für größere als auch für kleinere Anlagen geeignet sein und auch unterschiedliche Verunreinigungen des Gases (ausgenommen Abluft aus Lackspritzkabinen) aufnehmen können. Die Verunreinigungen, besonders die schwer wasserlöslichen Verunreinigungen, sollten aus dem Gas entfernt und durch biologischen Abbau umgewandelt werden, ohne daß die Gefahr der Trennung und/oder Austragung der Biomasse aus dem System besteht.

Erfindungsgemäß wurde festgestellt, daß diesen Zielen und Aufgaben ein nichtschäumendes oder schwachschäumendes Mittel zum Reinigen von Gasen oder Abgasen unter Abtrennung von unerwünschten chemischen Bestandteilen, vorzugsweise von organisch-chemischen Bestandteilen (ausgenommen Abluft aus Lackspritzkabinen) gerecht wird, wobei das Mittel mindestens zweiphasig ist und 0,1 bis 10 Gew.-% mindestens eines fettsäurefreien, nichtbakteriziden Tensides, 1 bis 25 Gew.-% mindestens einer nichtbakteriziden ölartigen physikalisch wasserunlöslichen oder wasserschwerlöslichen Flüssigkeit (gemessen bei Wassertemperatur), 0,001 bis 5 Gew.-% aerobe und/oder anaerobe Bakterien oder eines aeroben und/oder anaeroben Bakterienstammes (berechnet als Trockenmasse an Bakterien), mehr als 50 Gew.-% Wasser sowie 0 bis 10 Gew.-% mindestens eines Entschäumungsmittels, Verarbeitungshilfs- und/oder Zusatzmittels enthält oder daraus besteht.

Nach einer bevorzugten Ausführung enthält das Mittel 0,5 bis 2,5 Gew.-% mindestens eines fettsäurefreien, nichtbakteriziden Tensides, 1,5 bis 20 Gew.-% mindestens einer nichtbakteriziden ölartigen physikalisch wasserunlöslichen oder wasserschwerlöslichen Flüssigkeit (gemessen bei Wassertemperatur), 0,05 bis 1,5 Gew.-% aerobe und/oder anaerobe Bakterien oder eines aeroben und/oder anaeroben Bakterienstammes (berechnet als Trockenmasse an Bakterien), mehr als 65 Gew.-% Wasser sowie 0,01 bis 9 Gew.-% mindestens eines Entschäumungsmittels, Verarbeitungshilfs- und/oder Zusatzmittels, oder das Mittel besteht aus diesen Bestandteilen.

Das in dem Mittel enthaltene Tensid ist ein nichtschäumendes oder schwachschäumendes Tensid oder das Tensid oder Tensidgemisch enthält zusätzlich ein Entschäumungsmittel. Durch diese Auswahl werden weitgehend Schaumbildungen, insbesondere eine querschnittsabdeckende Schaumbildung, verhindert.

Das erfindungsgemäße Mittel ist ein mindestens zweiphasiges Mittel, bestehend aus mindestens einer äußeren Wasserphase und einer inneren Ölphase. Das Mittel stellt somit vorzugsweise eine "Öl-in-Wasser-Emulsion" oder -Mikroemulsion dar.

Nach einer Ausführungsform besteht das Tensid aus einem Gemisch von mindestens zwei Tensiden mit unter-schiedlichen HLB-Werten, die sich um mehr als 3 (HLB-Werte), vorzugsweise mehr als 5 (HLB-Werte), unterscheiden. Nach einer weiteren Ausführungsform besteht das nichtbakterizide Tensid oder nichtbakterizide Tensidgemisch aus mindestens einem fettsäurefreien, nichtionogenen, nichtschäumenden oder schwachschäumenden Tensid und/oder mindestens einem nichtionogenen schäumenden nichtbakteriziden und fettsäurefreien Tensid, das zusätzlich mindestens ein nichtbakterizides Entschäumungsmittel enthält und/oder aus einem Gemisch von mindestens einem nichtionogenen, nichtbakteriziden Tensid mit mindestens einem ionogenen nichtbakteriziden Tensid, die nichtschäumend oder schwachschäumend sind oder ein Entschäumungsmittel enthalten.

Nach einer anderen bevorzugten Ausführungsform ist in dem Mittel als Zusatzmittel mindestens ein inerter feinteiliger Feststoff, vorzugsweise amorphe Kieselsäure mit hydrophiler oder hydrophobierter Oberfläche, ein Siliziumdioxid, Siliziumoxidhydrat und/oder ein Verbindungsgemisch, das eine oder mehrere dieser Verbindungen enthält, in einer Gewichtsmenge von 0,05 bis 8 Gew.-%, vorzugsweise 0,5 bis 5 Gew.-%, und einer mittleren Teilchengröße unter 1 $\mu$m, vorzugsweise unter 0,1 $\mu$m, enthalten. Durch die Verwendung dieses sehr feinteiligen inerten Feststoffes gelingt es zusätzlich die innere Oberfläche und damit die Aufnahmekapazität für den zu entfernenden Schadstoff zu vergrößern. Stoßartig anfallende Schadstoffkonzentrationen im Abgas können dadurch besser abgefangen werden.

Besonders bevorzugt werden Siliziumoxidhydrate, Hydroxy- und/oder Oxygruppen enthaltende feinstteilige Siliziumverbindungen mit einer mittleren Körnungsgröße unter 0,08 $\mu$m eingesetzt.

Das Tensid oder Tensidgemisch in der angegebenen Matrix (Mittel und absorbierte oder absorbierte und gegebenenfalls adsorbierte Bestandteile) wird so ausgewählt, daß es biologisch schwer abbaubar (innerhalb von 24 Stunden nur maximal bis zu 20 Gew.-%, vorzugsweise bis zu 10 Gew.-%, bezogen auf den Gesamttensidgehalt im Mittel (100 Gew.-Teile)) ist.

Ebenso wird die organisch-chemische, ölartige, wasserunlösliche oder wasserschwerlösliche Flüssigkeit oder das ölartige Flüssigkeitsgemisch in der angegebenen Matrix (Mittel und absorbierte oder absorbierte und gegebenenfalls adsorbierte Bestandteile) so ausgewählt, daß sie bzw. es biologisch schwer abbaubar ist (innerhalb von 24 Stunden nur maximal bis zu 2 Gew.-%, vorzugsweise kleiner als 1 Gew.-%, bezogen auf 100 Gew.-Teile der im Mittel enthaltenen ölartigen, organisch-chemischen, wasserunlöslichen oder wasserschwerlöslichen Flüssigkeit oder der Mischung der ölartigen, organisch-chemischen wasserunlöslichen oder wasserschwerlöslichen Flüssigkeiten). Durch die schwere oder erschwerte biologische Abbaubarkeit des Tensides, vorzugsweise Tensidgemisches, und der ölartigen Flüssigkeit oder des Flüssigkeitsgemisches gelingt es, das Mittel in einen Kreislaufprozeß einzusetzen, wobei eine Nachregulierung oder Nachfüllung oder Nacheinstellung unter Zugabe des Mittels oder eines oder mehrerer Bestandteile des Mittels innerhalb von 24 Stunden nur in einem begrenzten Umfang erforderlich wird.

Die im Mittel enthaltenen Bakterien bestehen nach einer bevorzugten Ausführungsform zu mehr als 80 Gew.-%, vorzugsweise zu mehr als 95 Gew.-% (bezogen auf 100 Gew.-% eingesetzte Bakterien), aus aeroben Bakterien. Innerhalb des Verfahrens wird mindestens an einer Stelle, vorzugsweise an zwei oder mehreren Stellen Luft, Sauerstoff oder ein sauerstoffhaltiges Gas oder eine sauerstoffhaltige Flüssigkeit mit dem Mittel in Kontakt gebracht. Nach einer besonders bevorzugten Ausführungsform werden adaptierte oder nicht adaptierte Bakterien aus Kläranlagen, Klärschlämmen oder speziell gezüchtete Bakterienstämme u. a. Pseudomonas putida, eingesetzt.

Die ölartige physikalisch wasserunlösliche oder wasserschwerlösliche organisch-chemische Flüssigkeit oder das Flüssigkeitsgemisch weist einen Siedepunkt von mehr als 450K, vorzugsweise mehr als 520K (gemessen bei 1000 hPa), und/oder einen Dampfdruck unter 1 hPa, vorzugsweise unter 0,1 hPa (gemessen bei 293,15 K) auf.

Nach einer bevorzugten Ausführungsform enthält die ölartige wasserunlösliche oder wasserschwerlösliche organisch-chemische Flüssigkeit oder das ölartige Flüssigkeitsgemisch mindestens eine flüssige organisch-chemische Verbindung oder ein Verbindungsgemisch, die bzw. das Ester-, Äther-, Hydroxy-, Oxyäther- oder Hydroxyäther-, Keto-, und/oder organische Phosphatgruppen und/oder einen Weichmacher für Kunststoffe und/oder ein Silikonöl enthält und nicht bakterizid ist, oder besteht daraus.

Nach einer anderen bevorzugten Ausführungsform enthält das Mittel 0,001 bis 3 Gew.-%, vorzugsweise 0,1 bis 1 Gew.-%, mindestens eines Co-Surfactants, Co-Tensides oder eines Hilfstensides, das die Wirkung des Tensides verstärkt, vorzugsweise ausgewählt aus der Gruppe der ein- oder mehrwertigen Alkohole oder Polyalkohole, Hydroxyester, Äther oder Polyäther, Ester und/oder Hydroxyäther oder Polyhydroxyäther.

Die Bestandteile des Mittels werden als in Wasser nichtschäumende oder in Wasser schwachschäumende Verbindungen ausgewählt und/oder durch Zugabe eines entsprechenden Gewichtsanteils eines Entschäumungsmittels in einer derartigen Gewichtskonzentration eingestellt und/oder in einer derartigen Auswahl eingesetzt, daß ein nichtschäumendes oder sehr schwach schäumendes Mittel zur Reinigung von

Gasen oder Abgasen vorliegt.

Nach einer vorzugsweisen Ausführungsform beträgt das Gewichtsverhältnis der im Mittel enthaltenen Bakterien (berechnet als Trockengewicht) zu der nicht bakteriziden ölartigen Flüssigkeit 1 : 2 bis 1 : 200, vorzugsweise 1 : 7 bis 1 : 100, und/oder das Gewichtsverhältnis der im Mittel enthaltenen Bakterien zum Tensid oder Tensidgemisch 1 : 0,7 bis 1 : 30, vorzugsweise 1 : 1,2 bis 1 : 20.

Nach einer anderen bevorzugten Ausführungsform enthält das Mittel als Zusatzmittel 0 oder 0,1 Gew.-% bis 10 Gew.-%, vorzugsweise 0,5 bis 9 Gew.-%, mindestens eines feinteiligen Trägerstoffes mit einem mittleren Körnungsdurchmesser von unter 4 mm, vorzugsweise unter 200 $\mu$m. Die Trägerstoffe werden vorzugsweise ausgewählt aus der Gruppe der Trägerstoffe mit einer spezifischen Oberfläche (gemessen nach BET) von mehr als 300 $m^2/g$. Vorzugsweise werden Aktivkohle, Silikate, Mischsilikate, Hydroxysilikate, Erdalkalioxide und/oder Aluminiumverbindungen enthaltende Silikate, Siliziumverbindungen einschließlich Silikate oder Siliziumoxid enthaltende Erdalkalioxide oder Erdalkalimischoxide, Kieselsäure, keramische Trägermaterialien als Trägerstoff eingesetzt. Sämtliche Trägermaterialien werden in hydrophobierter und/oder nichthydrophobierter Form, allein oder im Gemisch mit einem oder mehreren anderen Trägerstoffen verwendet.

Nach einer weiteren bevorzugten Ausführungsform enthält das Mittel als Zusatzmittel 0,005 bis 8 Gew.-%, vorzugsweise 0,05 bis 6 Gew.-%, mindestens eines löslichen, dispergierbaren oder in dem Mittel suspendierbaren Hilfsmittels, das mit dem oder den Schadstoff(en) unter Polymerisation, Polykondensation oder Polyaddition reagiert und/oder die Polymerisation, Polykondensation oder Polyaddition initiert oder beschleunigt.

Die Art und die eingesetzte Konzentration (innerhalb des angegebenen prozentualen Gewichtsbereiches) richtet sich nach der Art und der chemischen Zusammensetzung der zu entfernenden Verunreinigungen. Nach einer bevorzugten Ausführungsform werden ionische oder organische Kettenstarter, Katalysatoren und/oder Mittel zur Reaktionsbeschleunigung eingesetzt, chemische Mittel oder Komponenten zugefügt, die mit dem abzuscheidenden Schadstoff unter Polymerisation, Kondensation oder Polykondensation und/oder Addition oder Polyaddition reagieren, wobei bevorzugt solche eingesetzt werden, die zu leicht mechanisch abtrennbaren oder schwerlöslichen Verbindungen im Medium führen. Die Abtrennung auf physikalischem Wege kann in an sich bekannten mechanischen Verfahren, vorzugsweise durch Filtration und/oder Sedimentation erfolgen.

Als Katalysatoren oder Beschleuniger werden u.a. organische oder anorganische Peroxide, vorzugsweise Alkaliperoxide, Ammoniumperoxodisulfate, peroxidische Borverbindungen, Alkylperoxide, insbesondere Butylperoxid, Azo- und/oder Nitrilverbindungen, z. B. Azoisobutylnitril, saure oder basische katalytisch wirkende Verbindungen und dgl. eingesetzt.

Das erfindungsgemäße Mittel zum Reinigen von Gasen oder Abgasen bricht nur sehr schwer. Auch bei einer Änderung des pH-Wertes bzw. pH-Wertänderungen in gewissen Bereichen tritt ein Brechen der Flüssigkeit nicht auf.

Als ölartige, physikalisch, wasserunlösliche oder wasserschwerlösliche Flüssigkeit werden nach einer Ausführungsform entsprechende Aliphate, Aromate, Paraffinkohlenwasserstoffe, Mineralöle oder deren Gemische und dgl. eingesetzt mit entsprechenden Siedepunkten. Diese Ausführungsform ist lediglich bei Vorhandensein ganz bestimmter Abgase, z. B. kunstharzhaltiger Abgasen zweckmäßig.

Bevorzugt wird jedoch eine ölartige, wasserunlösliche oder wasserschwerlösliche organische Flüssigkeit oder ein organisches Flüssigkeitsgemisch eingesetzt, die bzw. das Ester-, Ether-, Hydroxy-, Oxyether- oder Hydroxyether-, Keto- und/oder organische Phospatgruppen und/oder halogenierte organische Verbindungen mit mehr als 5 C-Atomen und/oder einem Weichmacher für Kunststoffe und/oder ein Silikonöl enthält und nicht bakterizid ist.

Als Weichmacher werden vor allem solche Verbindungen eingesetzt, die in dem Tensid oder Tensidgemisch und/oder in den im Gas enthaltenen flüssigen oder gasförmigen organisch-chemischen Bestandteilen, vorzugsweise organisch-chemischen Lösungsmitteln, löslich sind. Weiterhin werden vorzugsweise bei Raumtemperatur und/oder der Verfahrenstemperatur flüssige Weichmacher eingesetzt. Vorzugsweise werden als Weichmacher z. B. Alkyl-, Aryl- oder Alkyl-Arylphthalate, vorzugsweise Diisononylphthalat, Benzylbutylphthalate, Alkylphosphate bzw. Phosphorsäureester, vorzugsweise Tributylphosphat, Adipate, vorzugsweise Benzyloctyladipat und/oder Diisononyladipat, Di-(2-äthylhexyl)-adipat, Stearate und Oleate, z. B. Alkylstearate oder Alkyloleate, vorzugsweise Butyloleat, Butylstearat oder Amylstearat, Bis-(dimethylbenzyl)-ether, p-Toluolsulfonsäureäthylester, Glycerinester, Glycerinether oder höhermolekulare Glykolether eingesetzt. Als Ersatz oder Teilersatz für Weichmacher können vorteilhaft gleiche Gewichtsmengen organisch-chemischer flüssiger Verbindungen mit mehr als 5 C-Atomen auf der Basis von Ketonen, z. B. Ketone mit Alkyl-, Aryl- der Arylalkylgruppen, vorzugsweise Benzophenon, Äthylbenzophenon und/oder halogenierte, vorzugsweise fluorierte organischchemische Verbindungen mit mehr als 5 C-Atomen und/oder Polyvinylalkylether vorzugsweise Polyvinylmethylether, verwendet werden. Nach einer Ausführungsform werden bevorzugt Gemische eingesetzt.

Nach einer bevorzugten Ausführungsform wird der Weichmacher oder ein anderer Ester, der Ether, das Etherderivat, der Polyether oder der Hydroxygruppen enthaltende Polyether durch mindestens einen Stabilisator stabilisiert.

Nach einer anderen bevorzugten Ausführungsform ist der flüssige Weichmacher oder andere flüssige Ester ganz oder teilweise durch mindestens einen flüssigen Ether mit mehr als 5 C-Atomen, vorzugsweise mit mehr als 8 C-Atomen, und/oder ein mehr als 5 C-Atome, vorzugsweise mehr als 8 C-Atome, enthaltendes Etherderivat, einen Polyether und/oder einen Hydroxygruppen enthaltenden Ether oder Polyether ersetzt.

Als Tenside werden bevorzugt nichtionische Tenside eingesetzt, vorzzugsweise Alkyl- und Alkylphenylpolyethylenglykolether, Alkylolamide oder Trialkylaminoxide und/oder fluorhaltige Tenside.

Nach einer anderen bevorzugten Ausführungsform werden die nichtionischen Tenside im Gemisch mit ionischen Tensiden, vorzugsweise anionischen und/oder amphoteren Tensiden eingesetzt.

Nach einer bevorzugten Ausführungsform beträgt das Gewichtsverhältnis von nichtionischem Tensid zu ionischem Tensid 50 : 1 bis 1 : 1, vorzugsweise 25 : 1 bis 5 : 1.

Als Tenside oder Tensidgemische werden vorzugsweise verwendet Polyoxyethylen-Verbindungen und/oder Polyalkylenglykolether und/oder Polyoxyethylen-Nonylphenol für sich allein oder in Kombination mit Isopropylamin-Dodecylbenzolsulfat und/oder Alkylarylsulfonat und/oder fluorhaltige Tenside.

Die Erfindung betrifft weiterhin ein Verfahren zur Reinigung von Abgasen, wobei die Abgase einer Gaswaschvorrichtung kontinuierlich oder diskontinuierlich zugeführt, dort verteilt und mit dem Abgas in Kontakt gebracht werden. Die Schadstoffe, Verunreinigungen oder abzutrennenden Stoffe werden mit der Waschflüssigkeit zumindestens in mindestens einen Reaktions-, Umsetzungs-, und/oder Absetz- oder Abtrennungsbehälter oder in ähnliche Vorrichtungen überführt, wo die Schadstoffe oder ein Teil derselben auf biologischem Wege umgesetzt, abgebaut und/oder chemisch oder physikalisch verändert und/oder ganz oder teilweise nachfolgend abgetrennt werden. Die dabei verwendete Waschflüssigkeit ist mindestens zweiphasig und enthält 0,1 bis 10 Gew.-% mindestens eines fettsäurefreien, nichtbakteriziden Tensides, 1 bis 25 Gew.-% mindestens einer nichtbakteriziden ölartigen physikalisch wasserunlöslichen oder wasserschwerlöslichen Flüssigkeit (gemessen bei Wassertemperatur), 0,001 bis 5 Gew.-% aerobe und/oder anaerobe Bakterien oder eines aeroben und/oder anaeroben Bakterienstammes (berechnet als Trockenmasse an Bakterien) mehr als 50 Gew.-% Wasser sowie 0 bis 10 Gew.-% mindestens eines Entschäumungsmittels, Verarbeitungshilfs- und/oder Zusatzmittels. Diese Waschflüssigkeit gelangt im fein- oder feinstverteilten Zustand mit dem in Gegenrichtung geleiteten Abgas in Kontakt oder wird in Gegenwart des Abgases vernebelt, verdüst oder verwirbelt, ohne daß sich eine querschnittsbedeckende Schaumschicht bildet. Die die organisch-chemischen Bestandteile des Gases oder die Verunreinigungen enthaltende Waschflüssigkeit wird danach an oder in der Nähe des Bodens der Gaswaschvorrichtung abgeleitet oder abgezogen oder abgepumpt und unmittelbar oder unter Zwischenschaltung weiterer Verfahrensschritte zu einem oder mehreren Reaktions-, Umsetzungs- und/oder Absetz- oder Abtrennbehältern geführt und die von den organisch-chemischen Stoffen, Lösemitteln oder Schadstoffen gereinigte Waschflüssigkeit ganz oder teilweise in die Gaswaschvorrichtung zurückgeleitet und erneut zur Abgasreinigung verwendet.

Für das Verfahren wird nach einer bevorzugten Ausführungsform eine Waschflüssigkeit verwendet, die 0,5 bis 2,5 Gew.-% mindestens eines fettsäurefreien, nichtbakteriziden Tensides, 1,5 bis 20 Gew.-% mindestens einer nichtbakteriziden ölartigen physikalisch wasserunlöslichen oder wasserschwerlöslichen Flüssigkeit (gemessen bei Wassertemperatur), 0,05 bis 1,5 Gew.-% aerobe und/oder anaerobe Bakterien oder eines aeroben und/oder anaeroben Bakterienstammes (berechnet als Trockenmasse an Bakterien), mehr als 60 Gew.-% Wasser sowie 0,01 bis 9 Gew.-% mindestens eines Entschäumungsmittels, Verarbeitungshilfs-, Umsetzungsmittels/Agens und/oder Zusatzmittels enthält. Auch diese Waschflüssigkeit gelangt im fein- oder feinstverteilten Zustand mit dem in Gegenrichtung geleiteten Abgas in Kontakt oder wird in Gegenwart des Abgases vernebelt, verdüst oder verwirbelt, ohne daß sich eine querschnittsbedeckende Schaumschicht bildet.

Neben dem Tensid oder Tensidgemisch wird mindestens nach einer vorzugsweisen Ausführungsform mindestens ein inerter feinteiliger Feststoff in einer Gewichtsmenge von 0,05 bis 8 Gew.-%, vorzugsweise 0,5 bis 5 Gew.-%, und einer Teilchengröße unter 1 $\mu$m, vorzugsweise unter 0,1 $\mu$m, im Mittel verwendet.

Das erfindungsgemäße Mittel und Verfahren wird bevorzugt in Kombination mit 0,1 bis 10 Gew.-%, vorzugsweise 0,5 bis 9 Gew.-% eines feinteiligen Trägerstoffes mit einem mittleren Körnungsdurchmesser von unter 4 mm, vorzugsweise unter 200 $\mu$m, eingesetzt.

Nach einer anderen bevorzugten Ausführungsform wird innerhalb des Verfahrens eine Waschflüssigkeit verwendet, die 0,005 bis 8 Gew.-%, vorzugsweise 0,05 bis 4 Gew.-%, mindestens eines gelösten, eines

dispergierten oder suspendierten Hilfsmittels enthält, das mit dem oder den Schadstoff(en) unter Polymerisation, Polyaddition oder Polykondensation reagiert und/oder die Polymerisation, Polyaddition oder Polykondensation initiiert oder beschleunigt, oder daß dieses Hilfsmittel in der genannten Konzentration der im Reaktions-, Umsetzungs-, und/oder Absetz- oder Trennbehälter befindlichen Flüssigkeit zugegeben wird.

Nach einer weiteren bevorzugten Ausführungsform wird die Waschflüssigkeit nach dem Durchtritt durch die Gaswaschvorrichtung in mindestens einen, von der Gaswaschvorrichtung getrennt angeordneten Reaktor geleitet, die biologisch abbaubaren oder umwandelbaren Verunreinigungen unter Mitverwendung von aeroben Bakterien und Sauerstoff, sauerstoffhaltigen Gasen oder sauerstoffhaltigen Flüssigkeiten unter Zwangsbewegung der aerobe Bakterien enthaltenden Waschflüssigkeit umgesetzt und die nach der Umsetzung entstandene gereinigte Flüssigkeit, Emulsion, Mikroemulsion und/oder Suspension ganz oder in einem Teilstrom zu der Gaswaschvorrichtung zurückgeführt, dort verteilt und mit dem zu reinigenden Gas erneut in Kontakt gebracht.

Die Waschflüssigkeit wird gemäß der Erfindung in einer Mindestberieselungsdichte von 1 bis 100 $m^3/m^2h$, vorzugsweise 2 bis 75 $m^3/m^2h$, in der Gaswaschvorrichtung verteilt und/oder als mindestens zweiphasige Waschflüssigkeit eine solche verwendet, die aus einer äußeren Wasserphase und einer inneren Ölphase besteht.

Als Co-Tensid oder Co-Surfactant werden je nach Art des eingesetzten Tensides, Weichmachers und/oder des zu entfernenden organisch-chemischen Lösungsmittels aliphatische Alkohole, vorzugsweise mehrwertige Alkohole mit zwei oder mehreren Hydroxylgruppen mit $C_2$ - $C_{16}$, vorzugsweise $C_3$ - $C_{12}$, einschließlich Glykole, Glycerin sowie Glykolester und Glykolether, flüssige Glycerinether und/oder flüssige Polyglycerine oder auch Polyhydroxyether, -ester oder Polyalkohole eingesetzt.

Beispiele:

Beispiel 1

Zur Darstellung des Mittels mischt man in einen Behälter bis zum Erhalt einer feinteiligen Emulsion:
10 Gewichtsteile
Di-(2-ethylhexyl)phthalat als nichtbakterizide, ölartige, schwer wasserlösliche Flüssigkeit
2 Gewichtsteile
eines Nonylphenolpolyglykolethers mit durchschnittlich 9 angelagerten Molekülen Ethylenoxid/Molekül

$(C_9H_{19}-$ 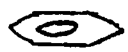 $-O-(C_2H_4O)_{\bar{x}}-H, \bar{x}=9)$

als nichtionisches, fettsäurefreies, schwachschäumendes Tensid
0,3 Gewichtsteile
Bakterien (ber. als Trockenmasse) (aus dem Klärschlamm einer Kläranlage)
0,5
Gewichtsteile Polydimethylsiloxan ((R)Baysilon M 2000 (Fa. Bayer)) als Entschäumungsmittel
und
87,2 Gewichtsteile
Wasser

Beispiel 2

Zur Darstellung des Mittels mischt man in einen Behälter bis zum Erhalt einer feinteiligen Emulsion:
10 Gewichtsteile
Di-(2-ethylhexyl)phthalat als nichtbakterizide, ölartige, schwer wasserlösliche Flüssigkeit
1 Gewichtsteile
eines Nonylphenolpolyglykolethers mit durchschnittlich 9 angelagerten Molekülen Ethylenoxid/Molekül

$(C_9H_{19}-$ 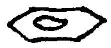 $-O-(C_2H_4O)_{\bar{x}}-H, \bar{x}=9)$

als nichtionisches, fettsäurefreies, schwachschäumendes Tensid
0,3 Gewichtsteile
Bakterien (ber. als Trockenmasse) (aus dem Klärschlamm einer Kläranlage)

2 Gewichtsteile
eines hochdispersen, amorphen Siliciumdioxids mit einer durchschnittlichen Teilchengröße von 12 nm; ((R)Aerosil 200 (Fa.Degussa) als inerter feinteiliger Feststoff)
und
86,7 Gewichtsteile
Wasser

In der beigefügten Abbildung ist das erfindungsgemäße Verfahren und die Vorrichtskombination schematisch dargestellt.

Die Gaswaschvorrichtung, vorzugsweise die Gegenstromabsorbervorrichtung 1, hat unterhalb ein Drittel ihrer Höhe, vorzugsweise unterhalb ein Viertel ihrer Höhe, mindestens eine Rohgaseintrittsöffnung oder Rohgaseinleitungsvorrichtung. Das Rohgas, Abgas oder zu reinigende Gas, wird bevorzugt mittels eines Ventilators, einer Pumpe oder einer ähnlichen Vorrichtung in die Gaswaschvorrichtung eingebracht, wobei nach einer Ausführungsform Luft oder ein anderes Gas zugemischt werden kann. Im Gegenstrom wird das erfindungsgemäße Mittel bzw. die Waschflüssigkeit in feinverteilter Form mit dem Abgas oder zu reinigenden Gas in Kontakt gebracht, ohne daß sich eine querschnittsabdeckende Schaumschicht in der Gaswaschvorrichtung oder der Gegenstromabsorbervorrichtung bildet. Bevorzugt wird dabei eine Berieselungsdichte von 2 bis 75 $m^3/m^2h$ eingehalten, wobei in den Versuchen Berieselungsdichten von 2, 10, 20, 30, 40, 50, 60, 70 und 75 $m^3/m^2h$ bevorzugt eingestellt wurden.

Die Waschflüssigkeit gelangt in fein- oder feinstverteilter Form dabei in Kontakt mit dem Abgas, wobei nach einer bevorzugten Ausführungsform Rieselkörper oder -elemente, Füllkörper, Einbauten und/oder Feinstrahldüsen oder Waschflüssigkeitsverteilervorrichtungen eingesetzt werden. Das gereinigte Gas tritt an oder in der Nähe des Kopfes der Gaswaschvorrichtung aus oder wird dort abgezogen.

Nach einer bevorzugten Ausführungsform hat das Mittel zum Reinigen von Gas oder Abgasen in der Gaswaschvorrichtung eine etwas geringere Gewichtskonzentration, insbesondere an aeroben und anaeroben Bakterien. Die Bakterienkonzentration wird jedoch dabei bevorzugt innerhalb der angegebenen Gewichtskonzentration gehalten und wird bevorzugt 0,001 Gew.-% nicht unterschreiten.

Eine Aufsättigung, insbesondere der Bakterienkonzentration und/oder eines oder mehrerer anderer Bestandteile des Mittels erfolgt nach einer bevorzugten Ausführungsform in oder vor Erreichung des Reaktions- oder Umsetzungsbehälters 2.

Das mit den Schadstoffen oder zu entfernenden Verunreinigungen beladene erfindungsgemäße Mittel (Waschflüssigkeit) gelangt bevorzugt über mindestens eine Absorbervorlage 1 a, vorzugsweise unter Mitverwendung von mindestens einer Pumpe 7 und/oder einer ähnlichen Vorrichtung und/oder unter Verwendung von mindestens einem Regelventil 10 und/oder 12, zu mindestens einem Reaktions- und/oder Umsetzungsbehälter 2, der vorzugsweise mit mindestens einem Vorratsbehälter 4 für das erfindungsgemäße Mittel oder für die Bestandteile des erfindungsgemäßen Mittels und/oder für Zusatzmittel in Verbindung steht, wobei vorzugsweise mindestens eine Pumpe 8 und/oder eine Steuervorrichtung und/oder Regelvorrichtung für die Einleitung des Mittels oder mindestens eines Bestandteiles des Mittels angeordnet ist bzw. sind. Das erfindungsgemäße Mittel wird in dem Umsetzungsbehälter auf die Anwendungskonzentration eingestellt und weist dort die angegebenen Gewichtskonzentrationen auf.

Nach einer bevorzugten Ausführungsform ist mindestens ein Absetz- oder Abtrennbehälter 3 an mindestens einem Reaktions- oder Umsetzungsbehälter angeordnet und über mindestens einen Ventilator oder einer Luftzuführvorrichtung 6 wird bevorzugt Luft und/oder Sauerstoff oder ein anderes zur Versorgung der Bakterien geeignetes Gas- oder Gasgemisch eingeleitet, wobei vorzugsweise mittels einer Steuervorrichtung und/oder über mindestens ein Regelventil 13 die Luft oder Gaszuführung reguliert wird. Die Luftzufuhr erfolgt vorzugsweise zu dem Behälter 2. Nach einer bevorzugten Ausführungsform wird die Luft am oder in der Nähe des Behälterbodens eingeleitet.

Das Mittel oder die von den Schadstoffen oder abzutrennenden Stoffen gereinigte Waschflüssigkeit wird bevorzugt über mindestens eine Pumpe 9 und/oder ein Regelventil 14 zu der Gaswaschvorrichtung 1 zurückgeleitet, wobei bevorzugt ein Teilstrom des Mittels mit einem gewissen Schadstoffgehalt über mindestens ein Regelventil 11 und/oder über eine Pumpe 7 in einem Teilkreislauf geführt und mit der gereinigten Waschflüssigkeit in die Gaswaschvorrichtung 1 oder die Gegenstromabsorbervorrichtung 1 eingeleitet wird.

**Patentansprüche**

1. Nichtschäumendes oder schwachschäumendes Mittel zum Reinigen von Gasen oder Abgasen unter Abtrennung von unerwünschten chemischen Bestandteilen, vorzugsweise von organisch-chemischen Bestandteilen, wobei das Mittel mindestens zweiphasig ist und

0,1 bis 10 Gew.-% mindestens eines fettsäurefreien, nichtbakteriziden Tensides,

1 bis 25 Gew.-% mindestens einer nichtbakteriziden ölartigen physikalisch wasserunlöslichen oder wasserschwerlöslichen Flüssigkeit (gemessen bei Wassertemperatur),

0,001 bis 5 Gew.-% aerobe und/oder anaerobe Bakterien oder eines aeroben und/oder anaeroben Bakterienstammes (berechnet als Trockenmasse an Bakterien),

mehr als 50 Gew.-% Wasser sowie

0 bis 10 Gew.-% mindestens eines Entschäumungsmittels, Verarbeitungshilfs- und/oder Zusatzmittels enthält oder daraus besteht.

**2.** Mittel nach Anspruch 1, dadurch gekennzeichnet, daß das Mittel

0,5 bis 2,5 Gew.-% mindestens eines fettsäurefreien, nichtbakteriziden Tensides,

1,5 bis 20 Gew.-% mindestens einer nichtbakteriziden ölartigen physikalisch wasserunlöslichen oder wasserschwerlöslichen Flüssigkeit (gemessen bei Wassertemperatur),

0,05 bis 1,5 Gew.-% aerobe und/oder anaerobe Bakterien oder eines aeroben und/oder anaeroben Bakterienstammes (berechnet als Trockenmasse an Bakterien),

mehr als 65 Gew.-% Wasser sowie

0,01 bis 9 Gew.-% mindestens eines Entschäumungsmittels, Verarbeitungshilfs- und/oder Zusatzmittels enthält oder daraus besteht.

**3.** Mittel nach Ansprüchen 1 und 2, dadurch gekennzeichnet, daß das Tensid ein nichtschäumendes oder schwachschäumendes Tensid ist oder das Tensid oder Tensidgemisch zusätzlich ein Entschäumungsmittel enthält.

**4.** Mittel nach einem oder mehreren der Ansprüche 1 bis 3, dadurch gekennzeichnet, daß das mindestens zweiphasige Mittel aus mindestens einer äußeren Wasserphase und einer inneren Ölphase besteht.

**5.** Mittel nach einem oder mehreren der Ansprüche 1 bis 4, dadurch gekennzeichnet, daß das Tensid aus einem Gemisch von mindestens zwei Tensiden mit unterschiedlichen HLB-Werten, die sich um

mehr als 3 (HLB-Werte), vorzugsweise
mehr als 5 (HLB-Werte),

unterscheiden, besteht.

**6.** Mittel nach einem oder mehreren der Ansprüche 1 bis 5, dadurch gekennzeichnet, daß das nichtbakterizide Tensid oder nichtbakterizide Tensidgemisch aus mindestens einem fettsäurefreien, nichtionogenen, nichtschäumenden oder schwachschäumenden Tensid und/oder mindestens einem nichtionogenen, schäumenden, nichtbakteriziden und fettsäurefreien Tensid, das zusätzlich mindestens ein nichtbakterizides Entschäumungsmittel enthält und/oder ein Gemisch von mindestens einem nichtionogenen, nichtbakteriziden Tensid mit mindestens einem ionogenen nichtbakteriziden Tensid, die nichtschäumend oder schwachschäumend sind oder ein Entschäumungsmittel enthalten, besteht.

**7.** Mittel nach einem oder mehreren der Ansprüche 1 bis 6, dadurch gekennzeichnet, daß in dem Mittel als Zusatzmittel mindestens ein inerter feinteiliger Feststoff, vorzugsweise amorphe Kieselsäure mit hydrophiler oder hydrophobierter Oberfläche, ein Siliziumdioxid, Siliziumoxidhydrat und/oder Verbindungsgemische, die eine oder mehrere dieser Verbindungen enthalten, in einer Gewichtsmenge von

0,05 bis 8 Gew.-%, vorzugsweise

0,5 bis 5 Gew.-%,

und einer mittleren Teilchengröße

unter 1 µm, vorzugsweise
unter 0,1 µm,

enthalten ist.

**8.** Mittel nach einem oder mehreren der Ansprüche 1 bis 7, dadurch gekennzeichnet, daß das Tensid oder Tensidgemisch in der angegebenen Matrix (Mittel und absorbierte oder absorbierte und gegebenenfalls adsorbierte Bestandteile) biologisch schwer abbaubar (innerhalb von 24 Stunden nur maximal

bis zu 20 Gew.-%, vorzugsweise
bis zu 10 Gew.-%,

bezogen auf den Gesamttensidgehalt im Mittel (100 Gew.-Teile)) ist.

**9.** Mittel nach einem oder mehreren der Ansprüche 1 bis 8, dadurch gekennzeichnet, daß die organisch-chemische, ölartige, wasserunlösliche oder wasserschwerlösliche Flüssigkeit oder das ölartige Flüssigkeitsgemisch in der angegebenen Matrix (Mittel und absorbierte oder absorbierte und gegebenenfalls adsorbierte Bestandteile) biologisch schwer abbaubar ist (innerhalb von 24 Stunden nur maximal bis zu 2 Gew.-%, vorzugsweise kleiner als 1 Gew.-%, bezogen auf 100 Gew.-Teile der im Mittel enthaltenen ölartigen, organisch-chemischen, wasserunlöslichen oder wasserschwerlöslichen Flüssigkeit oder der Mischung der ölartigen, organisch-chemischen wasserunlöslichen oder wasserschwerlöslichen Flüssigkeiten).

**10.** Mittel nach einem oder mehreren der Ansprüche 1 bis 9, dadurch gekennzeichnet, daß die im Mittel enthaltenen Bakterien

zu mehr als 80 Gew.-%, vorzugsweise
zu mehr als 95 Gew.-%

(bezogen auf 100 Gew.-% eingesetzte Bakterien), aerobe Bakterien sind.

**11.** Mittel nach einem oder mehreren der Ansprüche 1 bis 10, dadurch gekennzeichnet, daß die ölartige physikalisch wasserunlösliche oder wasserschwerlösliche organisch-chemische Flüssigkeit oder das Flüssigkeitsgemisch einen Siedepunkt von

mehr als 450K, vorzugsweise
mehr als 520K

(gemessen bei 1000 hPa), und/oder einen Dampfdruck

unter 1 hPa, vorzugsweise
unter 0,1 hPa

(gemessen bei 293,15 K) aufweist.

**12.** Mittel nach einem oder mehreren der Ansprüche 1 bis 11, dadurch gekennzeichnet, daß die ölartige wasserunlösliche oder wasserschwerlösliche organisch-chemische Flüssigkeit oder das ölartige Flüssigkeitsgemisch mindestens eine flüssige organisch-chemische Verbindung oder ein Verbindungsgemisch enthält oder daraus besteht, die Ester-, Äther-, Hydroxy-, Oxyäther-oder Hydroxyäther-, Keto-, und/oder organische Phosphatgruppen und/oder einen Weichmacher für Kunststoffe und/oder ein Silikonöl enthält und nicht bakterizid ist.

**13.** Mittel nach einem oder mehreren der Ansprüche 1 bis 12, dadurch gekennzeichnet, daß das Mittel

0,001 bis 3 Gew.-%, vorzugsweise
0,1 bis 1 Gew.-%,

mindestens eines nicht bakteriziden Co-Surfactant, Co-Tensides oder eines Hilfstensides enthält, das die Wirkung des nicht bakteriziden Tensides verstärkt und/oder das nicht bakterizide Tensid teilweise ersetzt, vorzugsweise ausgewählt aus der Gruppe der ein- oder mehrwertigen Alkohole oder Polyalkohole, Hydroxyalkohole, Äther oder Poly-äther, Ester und/oder Hydroxyester oder Polyhydroxyäther.

**14.** Mittel nach einem oder mehreren der Ansprüche 1 bis 13, dadurch gekennzeichnet, daß die Bestandteile des Mittels als in Wasser nichtschäumende oder in Wasser schwachschäumende Verbindungen und/oder durch einen entsprechenden Gewichtsanteil eines Entschäumungsmittels in einer derartigen Gewichtskonzentration vorliegen und/oder in einer derartigen Auswahl eingesetzt werden, daß ein nichtschäumendes oder sehr schwachschäumendes Mittel zur Reinigung von Gasen oder Abgasen vorliegt.

**15.** Mittel nach einem oder mehreren der Ansprüche 1 bis 14, dadurch gekennzeichnet, daß das Gewichtsverhältnis der im Mittel enthaltenen Bakterien (berechnet als Trockengewicht) zu der nicht bakteriziden ölartigen Flüssigkeit 1 : 2 bis 1 : 200, vorzugsweise 1 : 7 bis 1 : 100, beträgt.

**16.** Mittel nach einem oder mehreren der Ansprüche 1 bis 15, dadurch gekennzeichnet, daß das Gewichtsverhältnis der im Mittel enthaltenen Bakterien zum Tensid oder Tensidgemisch 1 : 0,7 bis 1 : 30, vorzugsweise 1 : 1,2 bis 1 : 20, beträgt.

**17.** Mittel nach einem oder mehreren der Ansprüche 1 bis 16, dadurch gekennzeichnet, daß das Mittel als Zusatzmittel

0 oder 0,1 Gew.-% bis 10 Gew.-%, vorzugsweise
0,5 bis 9 Gew.-%,

mindestens eines feinteiligen Trägerstoffes mit einem mittleren Körnungsdurchmesser von

unter 4 mm, vorzugsweise
unter 200 $\mu$m,

enthält, vorzugsweise ausgewählt aus der Gruppe der Trägerstoffe mit einer spezifischen Oberfläche (gemessen nach BET) von mehr als 300 $m^2/g$, vorzugsweise Aktivkohle, Silikate, Mischsilikate, Hydroxysilikate, Erdalkalioxide und/oder Aluminiumverbindungen enthaltende Silikate, Siliziumverbindungen einschließlich Silikate oder Siliziumoxid enthaltende Erdalkalioxide oder Erdalkalimischoxide, Kieselsäure, keramische Trägermaterialien, sämtliche vorgenannten Trägermaterialien in hydrophobierter oder nichthydrophobierter Form, allein oder im Gemisch mit anderen Trägerstoffen.

**18.** Mittel nach einem oder mehreren der Ansprüche 1 bis 17, dadurch gekennzeichnet, daß das Mittel als Zusatzmittel

0,005 bis 8 Gew.-%, vorzugsweise
0,05 bis 6 Gew.-%,

mindestens eines löslichen, dispergierbaren oder in dem Mittel suspendierbaren Hilfsmittels enthält, das mit dem oder den Schadstoff(en) unter Polymerisation, Polykondensation oder Polyaddition reagiert und/oder die Polymerisation, Polykondensation oder Polyaddition initiert oder beschleunigt.

**19.** Verfahren zur Reinigung von Abgasen, wobei die Abgase einer Gaswaschvorrichtung kontinuierlich oder diskontinuierlich zugeführt, dort verteilt und mit dem Abgas in Kontakt gebracht, die Schadstoffe, Verunreinigungen oder abzutrennende Stoffe mit der Waschflüssigkeit in mindestens einen Reaktions-, Umsetzungs-, und/oder Absetz- oder Abtrennungsbehälter oder in eine ähnliche Vorrichtung überführt, wo die Schadstoffe oder ein Teil derselben auf biologischem Wege umgesetzt, abgebaut und/oder chemisch oder physikalisch verändert und/oder ganz oder teilweise nachfolgend abgetrennt werden, dadurch gekennzeichnet, daß die verwendete Waschflüssigkeit mindestens zweiphasig ist und

0,1 bis 10 Gew.-% mindestens eines fettsäurefreien, nichtbakteriziden Tensides,

1 bis 25 Gew.-% mindestens einer nichtbakteriziden ölartigen physikalisch wasserunlöslichen oder wasserschwerlöslichen Flüssigkeit (gemessen bei Wassertemperatur),

0,001 bis 5 Gew.-% aerobe und/oder anaerobe Bakterien oder eines aeroben und/oder anaeroben Bakterienstammes (berechnet als Trockenmasse an Bakterien)

mehr als 50 Gew.-% Wasser sowie

0 bis 10 Gew.-% mindestens eines Entschäumungsmittels, Verarbeitungshilfs- und/oder Zusatzmittels enthält, daß die Waschflüssigkeit im fein oder feinstverteilten Zustand mit dem in Gegenrichtung geleiteten Abgas in Kontakt gelangt oder in Gegenwart des Abgases vernebelt, verdüst oder verwirbelt wird, ohne daß sich eine querschnittsbedeckende Schaumschicht bildet, daß die die organisch-chemischen Bestandteile des Gases oder die Verunreinigungen enthaltende Waschflüssigkeit an oder in der Nähe des Bodens der Gaswaschvorrichtung abgeleitet oder abgezogen oder abgepumpt und unmittelbar oder unter Zwischenschaltung weiterer Verfahrensschritte zu einem oder mehreren Reaktions-, Umsetzungs- und/oder Absetz- oder Abtrennbehältern geführt und die von den organisch-chemischen Stoffen, Lösemitteln oder Schadstoffen gereinigte Waschflüssigkeit ganz oder teilweise in die Gaswaschvorrichtung zurückgeleitet und erneut zur Abgasreinigung verwendet wird.

**20.** Verfahren nach Anspruch 19, dadurch gekennzeichnet, daß für das Verfahren eine Waschflüssigkeit verwendet wird, die

0,5 bis 2,5 Gew.-% mindestens eines fettsäurefreien, nichtbakteriziden Tensides,

1,5 bis 20 Gew.-% mindestens einer nichtbakteriziden ölartigen physikalisch wasserunlöslichen oder wasserschwerlöslichen Flüssigkeit (gemessen bei Wassertemperatur),

0,05 bis 1,5 Gew.-% aerobe und/oder anaerobe Bakterien oder eines aeroben und/oder anaeroben Bakterienstammes (berechnet als Trockenmasse an Bakterien),

mehr als 60 Gew.-% Wasser sowie

0,01 bis 9 Gew.-% mindestens eines Entschäumungsmittels, Verarbeitungshilfs-, Umsetzungsmittels/Agens und/oder Zusatzmittels enthält, und die Waschflüssigkeit im fein- oder feinstverteilten Zustand mit dem in Gegenrichtung geleiteten Abgas in Kontakt gelangt oder in Gegenwart des Abgases vernebelt, verdüst oder verwirbelt wird, ohne daß sich eine querschnittsbedeckende Schaumschicht bildet.

**21.** Verfahren nach Ansprüchen 19 oder 20, dadurch gekennzeichnet, daß neben dem Tensid oder Tensidgemisch mindestens ein inerter feinteiliger Feststoff in einer Gewichtsmenge von 0,05 bis 8 Gew.-%, vorzugsweise 0,5 bis 5 Gew.-%, und einer Teilchengröße unter 1 $\mu$m, vorzugsweise unter 0,1 $\mu$m, im Mittel enthalten ist.

**22.** Verfahren nach einem oder mehreren der Ansprüche 19 bis 21, dadurch gekennzeichnet, daß eine Waschflüssigkeit verwendet wird, die

0,005 bis 8 Gew.-%, vorzugsweise
0,05 bis 4 Gew.-%,

mindestens eines gelösten, eines dispergierten oder suspendierten Hilfsmittels enthält, das mit dem oder den Schadstoff(en) unter Polymerisation, Polyaddition oder Polykondensation reagiert und/oder die Polymerisation, Polyaddition oder Polykondensation initiert oder beschleunigt oder daß dieses Hilfsmittel in der genannten Konzentration der im Reaktions- oder Umsetzbehälter befindlichen Flüssigkeit zugegeben wird.

**23.** Verfahren nach einem oder mehreren der Ansprüche 19 bis 22, dadurch gekennzeichnet, daß die Waschflüssigkeit nach dem Durchtritt durch die Gaswaschvorrichtung in mindestens einen oder mehreren, von der Gaswaschvorrichtung getrennt angeordneten Reaktions-, Umsetzungs-, und/oder Absetz- oder Abtrennungsbehältern geleitet, die biologisch abbaubaren oder umwandelbaren Verunreinigungen unter Mitverwendung von aeroben Bakterien und Sauerstoff, sauerstoffhaltigen Gasen oder sauerstoffhaltigen Flüssigkeiten unter Zwangsbewegung der aerobe Bakterien enthaltenden Waschflüssigkeit umgesetzt und die nach der Umsetzung entstandene gereinigte Flüssigkeit, Emulsion, Mikroemulsion oder Suspension ganz oder in einem Teilstrom zu der Gaswaschvorrichtung zurückgeführt, dort verteilt und mit dem zu reinigenden Gas erneut in Kontakt gebracht wird.

**24.** Verfahren nach einem oder mehreren der Ansprüche 19 bis 23, dadurch gekennzeichnet, daß die Waschflüssigkeit in einer Mindestberieselungsdichte von 1 bis 100 $m^3/m^2h$, vorzugsweise 2 bis 75 $m^3/m^2h$, in der Gaswaschvorrichtung verteilt wird und/oder als mindestens zweiphasige Waschflüssigkeit eine solche verwendet wird, die aus einer äußeren Wasserphase und einer inneren Ölphase besteht.

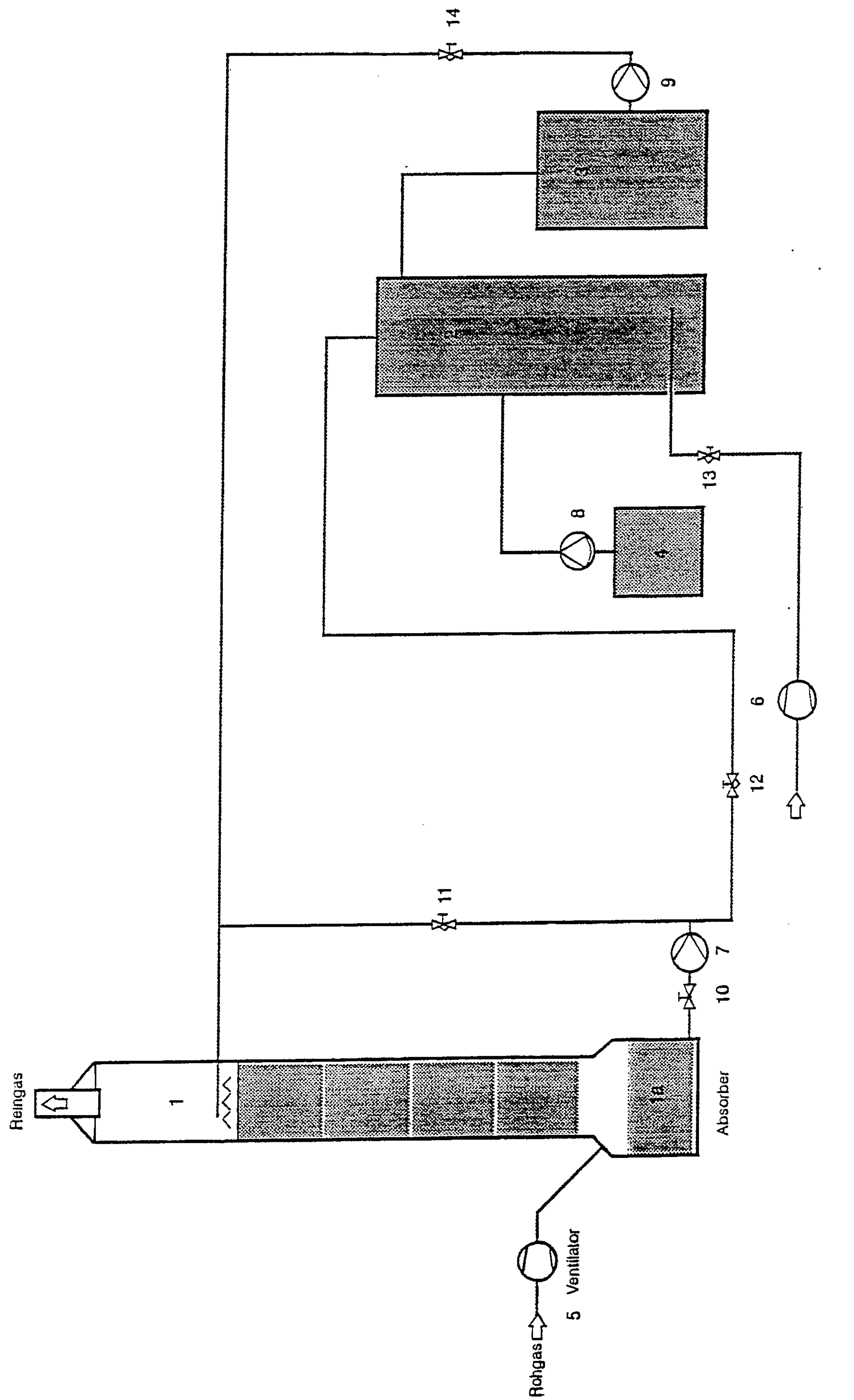
Reingas
1
1a
Absorber
Rohgas
5 Ventilator
7
10
11
12
6
4
8
13
3
9
14

Europäisches Patentamt

# EUROPÄISCHER RECHERCHENBERICHT

Nummer der Anmeldung

**EP 90 12 3952**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | WO-A-8 602 283 (J. COX)<br>* Seite 11, Zeile 25 - Seite 12, Zeile 34 *<br>– – – | 1,19 | B 01 D 53/00<br>B 01 D 53/34 |
| A | DE-A-3 641 442 (KERAMCHEMIE)<br>* Ansprüche 1-7; Spalte 3, Zeilen 17-47 *<br>– – – | 1,19 | |
| A | US-A-4 898 721 (R.M. ALWAY)<br>* Ansprüche 1-5 *<br>– – – | 1,19 | |
| A,P | EP-A-0 357 960 (ARASIN)<br>– – – | | |
| A | EP-A-0 281 844 (ARASIN)<br>– – – – – | | |

RECHERCHIERTE SACHGEBIETE (Int. Cl.5)

B 01 D
B 01 F

Der vorliegende Recherchenbericht wurde für alle Patentansprüche erstellt

| Recherchenort | Abschlußdatum der Recherche | Prüfer |
|---|---|---|
| Den Haag | 17 Mai 91 | KANOLDT W.W. |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze

E: älteres Patentdokument, das jedoch erst am oder nach dem Anmeldedatum veröffentlicht worden ist
D: in der Anmeldung angeführtes Dokument
L: aus anderen Gründen angeführtes Dokument

&: Mitglied der gleichen Patentfamilie, übereinstimmendes Dokument